# EUROPÄISCHE PATENTANMELDUNG

(11) **EP 1 054 045 A1**
(43) Veröffentlichungstag der Anmeldung: **22.11.2000**
(21) Anmeldenummer: 00110125.2
(22) Anmeldetag: 10.05.2000
(51) Int. Cl.: C09D 11/00

(54) **Pigmentpräparationen für den Ink-Jet-Druck**

(30) Priorität: 20.05.1999 DE 19923072
(71) Anmelder: BAYER AG, 51368 Leverkusen (DE)
(72) Erfinder: Grobe, Michael, 51467 Bergisch Gladbach (DE); Nyssen, Peter-Roger, 41542 Dormagen (DE); Krause, Michael, 51377 Leverkusen (DE); Kutschkau, Karina, 51381 Leverkusen (DE); Pfützenreuter, Dirk, 51399 Burscheid (DE)

(57) **Zusammenfassung**

Es wurden Pigmentpräparationen gefunden, enthaltend
a) wenigstens ein organisches Pigment oder Ruß
b) wenigstens einen gegebenenfalls ionisch modifizierten Phenol-Styrol-Polyglykolether und
c) wenigstens ein oberflächenaktives Mittel (Tensid) aus der Gruppe der oxalkylierten Acetylenglykole gemäß der Formel (I) 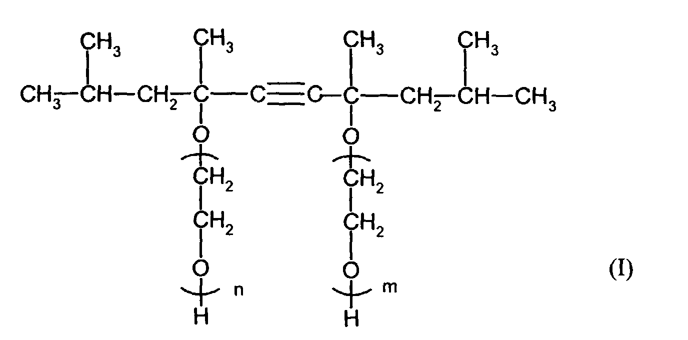 und/oder aus der Gruppe der Verbindungen der Formel II, III oder IV 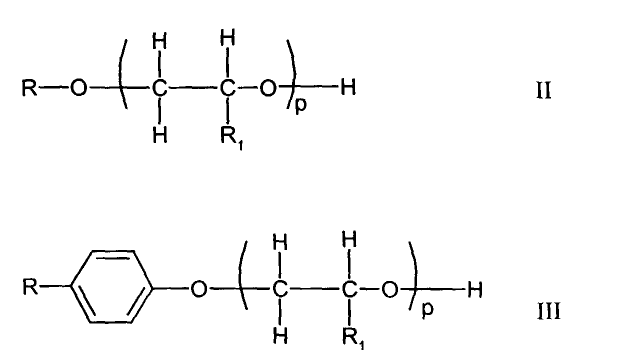 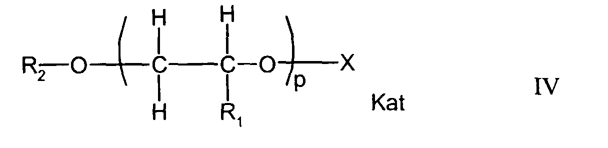 worin
   die Substituenten die in der Beschreibung angegebene Bedeutung besitzen.

## Beschreibung

Die vorliegende Erfindung betrifft Pigmentpräparationen für den Ink Jet Druck enthaltend Pigment ein Dispergiermittel aus der Gruppe der gegebenenfalls ionisch modifizierten Phenol-Styrol-Polyglykolether sowie ein oberflächenaktives Mittel aus der Gruppe der oxalkylierten Acetylenglykole oder der gegebenenfalls modifizierten Alkyl (Aryl)-Polyglykolether, ein Verfahren zur ihrer Herstellung sowie ihre Verwendung als Tinten für den Ink-Jet Druck.

In den letzten Jahren hat die Verwendung des Ink Jet Druckes als "non-impact", computergesteuerte Druckmethode stark zugenommen. Ink Jet Drucker sind "Drop-on-Demand"-Drucker, in denen durch ein elektronisches Signal sogenannte Tropfen flüssiger Tinten erzeugt werden und auf geeignete Substrate wie Papier oder Folien gesprüht werden und dabei die gewünschte Abbildung erzeugen. Mit der Verwendung von Tinten auf Basis von 4 Grundfarben wie Schwarz, Gelb, Cyan und Magenta, sowie der Computertechnik zur Erzeugung, Veränderung und Speicherung von Bild-, Text- oder Graphikinformationen können hochauflösende Abbildungen im nahezu gesamten visuellen Farbraum erzeugt werden. Unter dem Oberbegriff "Drop-on-Demand" sind 2 verschiedene Drucksysteme - wie beispielsweise in US-A-4 597 794 beschrieben - zu verstehen.

Im thermischen Ink Jet Druck werden Tropfen durch Einbringung thermischer Energie in die Tintenflüssigkeit erzeugt. Die heute verfügbaren Systeme zeichnen sich durch einen hohen technischen Standard für Farbabbildungen hoher optischer Qualität bis hin zu Fotoqualität aus und sind auch für Großformatdrucke und hohe Druckgeschwindigkeiten geeignet.

Im Piezo Ink Jet Druck werden die Tropfen mittels eines piezo-elektrischen Elementes erzeugt, welches durch Anlegung einer elektrischen Spannung angeregt wird und die Tinte kontinuierlich oder nach Bedarf (on-demand) ausstößt. Auch dieses System hat heute einen ähnlich hohen Standard wie das thermische System erreicht.

In beiden Systemen haben bis heute Tinten, die auf Lösungen wasserlöslicher Farbstoffe in einem wässrig-organischen Medium beruhen, die breiteste Verwendung gefunden. Den Vorteilen von Farbstoff-basierenden Tinten wie hohe Brillanz und optische Dichte der Ausdrucke stehen jedoch eine Reihe von Nachteilen gegenüber. Zu nennen sind die mangelhafte Lichtechtheit der Farbstoffe, das Eindringen in die Papierfasern und Verlaufen in das Papier (Feathering, mangelnde Randschärfe) sowie mangelnde Wisch- und Wasserfestigkeit der Ausdrucke infolge der Wasserlöslichkeit der Farbstoffe. Hochwertige Ausdrucke werden daher vielfach nur auf Spezialpapieren erhalten.

Eine Alternative stellen Wasser-basierende Tinten dar, die als farbgebende Komponenten organische Farbpigmente in ihrer partikulären Form enthalten. Darauf basierende Tintensysteme besitzen bei geeigneter Wahl der Pigmente deutlich bessere Echtheiten, insbesondere Licht- und Wetterechtheiten, so daß man an ihrer Verwendung besonders dort interessiert ist, wo es besonders auf diese Eigenschaft ankommt, wie z.B. Drucke für Plakate und Displays sowie Fotoreproduktionen.

Die heute im Markt erhältlichen pigmentierten Tinten besitzen jedoch noch eine Reihe von Nachteilen. Hinsichtlich der Fabbrillanz erreichen sie noch nicht die Qualität von Farbstofftinten. Außerdem sind aufgrund der Tendenz der suspendierten Partikel zur Agglomeration bisher Probleme wie Langzeitlagerstabilität der Tinten und störungsfreies Druckverhalten noch nicht zufriedenstellend gelöst. Die genannten Störungen können z.B. bedingt sein durch Zusetzen der feinen Düsenbohrungen, Ablagerungen oder Belegung der Partikel oder Inhaltsstoffe der Tinten auf den Druckkopfmaterialien, insbesondere den Heizlementen, sowie Eintrocknung oder Ablagerungen am Düsenaustritt.

Um die genannten Probleme, insbesondere hinsichtlich des Agglomerationsverhaltens, zu eliminieren, kommt der physikalischen Stabilisierung der Pigmentpartikel in dem wässrig-organischen Trägermedium der Tinten eine besondere Bedeutung zu. Stand der Technik ist hier die Verwendung von Dispergiermitteln, die die Partikel elektrostatisch und/oder sterisch stabilisieren. Gute Stabilisierung wird mit sterischen Dispergiermitteln erreicht, die i.A. sowohl hydrophobe Molekülteile, die zu den Pigmentoberflächen affin sind, besitzen, als auch hydrophile langkettige Molekülteile, die die eigentliche sterische Hinderung im wässrig-organischen Medium bewirken, besitzen.

Gemäß US-A-4 597 794 werden für den Ink Jet Druck polymere Dispergiermittel insbesondere statistische Copolymere bevorzugt oder sehr spezielle Block-Copolymere wie in EP-A-518 225 eingesetzt. Obwohl polymere Dispergiermittel für wässrige pigmentierte Drucktinten oft als den oligomeren Dispergiermitteln überlegen eingeschätzt werden, scheint ihre breite Verwendung noch nicht erfolgreich gelungen. Insbesondere sind noch eine Reihe von Nachteilen zu überwinden, die in Verbindung mit negativen Wechselwirkungen dieser Mittel in den Tintenrezepturen oder dem Aufzeichnungsmaterial oder den Elementen des Druckkopfes stehen.

Beispielsweise können die in den wässrig-organischen Trägermedien der Tinten verwendeten organischen Lösemittel - je nach Art und Mengenverhältnisse - die Lagerstabilität der Tinten beeinträchtigen. Dies gilt auch für grenzflächenaktive Mittel, die als zusätzliche Tintenbestandteile zur Verbesserung der Trocknungseigenschaften auf den Substraten in den Tinten eingesetzt werden. Da derartige Mittel Micellen in den Tinten bilden können, können sie die Affinität der Polymere zur Pigmentoberfläche bzw. auch zum wässrig-organisehen Trägermedium beeinträchtigen und so zu Reagglomeration der Pigmentpartikel führen.

Bekannt beispielsweise aus WO-A-97/43351 sind ferner andere Probleme mit Drucktinten bei Verwendung polymerer Dispergiermittel, wie z.B. ungleichmäßiges Druckbild bei längerem Drucken bedingt durch Kogation, also Ablagerungen auf den Heizelementen der Druckpatrone.

Um die genannten Nachteile zu überwinden, wird in WO-A-97/43351 die Verwendung von oligomeren Dispergiermitteln auf Basis von N-substituierten Aminosäuren, die durch Einführung ionischer Gruppen wasserlöslich eingestellt sind und als elektrostatisch wirkende Dispergiermittel zu verstehen sind, empfohlen. Allerdings zeigen die Beispiele auf, daß nicht mit allen in Frage kommenden Pigmenten stabile Tinten hergestellt werden können.

Im oben genannten Stand der Technik werden ferner als zusätzliche Tintenbestandteile oberflächenaktive Mittel (Netzmittel) genannt, mit denen die Oberflächenspannung der Tinten und insbesondere das Netz- und Trocknungsverhalten der Tinten auf den Substraten eingestellt werden kann. Als solche kommen Alkylphenoloxalkylate (WO-A-97/43351) und u.a. Acetylendiol-Derivate, Na-Sulfosuccinate sowie Alkylarylpolyether, (EP-A-0 518 225) in Frage.

Tatsache ist jedoch, wie oben bereits ausgeführt, daß gerade beim Einsatz derartiger Mittel eine Vielzahl von Parametern beeinflußt werden, so daß es nicht einfach ist, eine geeignete Kombination zu finden.

Besondere Bedeutung kommt auch der Auswahl der Pigmente für die Einstellung einer Trichromie in den Grundfarben wie z.B. Magenta, Cyan und Gelb sowie gegebenenfalls weiteren Farben zur Einstellung eines erweiterten Farbraumes zu. Geeignete Pigmente und daraus hergestellte Drucktinten müssen höchsten Ansprüchen hinsichtlich Farbbrillanz, Transparenz und Lichtechtheit genügen. Die nach dem Stand der Technik hergestellten pigmentierten Drucktinten sind in dieser Hinsicht noch nicht voll befriedigend. Das trifft besonders für den Farbort Gelb zu. Zur Erzielung ausreichender Transparenz und Brillanz sowie guten Druckeigenschaften müssen die Pigmente in sehr hoher Feinverteilung (sehr kleine Partikel) in den Drucktinten stabil vorliegen, womit bei vielen Pigmenten, insbesondere im Gelbbereich, eine Verschlechterung der Lichtechtheit verbunden ist. So zeigen beispielsweise am Markt erhältliche pigmentierte Tinten im Farbton Gelb eine gegenüber Cyan und Magenta schlechtere Lichtechtheit, was zu unerwünschten Farbveränderungen (Vergrauung) und Brillanzverlust unter Lichteinfluß führen kann.

Die erreichbare Farbbrillanz ist zudem nicht allein abhängig von der Partikelfeinheit, sondern auch von dem Benetzungsverhalten der Tinten auf dem Substrat. Hier besteht insbesondere für den Druck auf nicht-beschichteten Papieren noch erheblicher Verbesserungsbedarf.

In EP-A 839 879 werden Pigmentpräparationen für den Ink-Jet-Druck beschrieben, die zur Stabilisierung der Pigmente und insbesondere hochechter Gelbpigmente Dispergiermittel aus der Gruppe der gegebenenfalls ionisch-modifizierten Phenol-Styrol-Polyglykolether oder Naphthalinsulfonsäurekondensationsprodukte verwenden. Daraus hergestellte Drucktinten sind jedoch bezüglich brillanter Druckbilder und dem Trocknungsverhalten auf unterschiedlichen Substraten weiter zu verbessern.

Aufgabe der vorliegenden Erfindung war es wässrige Pigmentpräparationen für den Ink-Jet-Druck bereitzustellen, die die oben beschriebenen Nachteile nicht aufweisen.

Überraschend wurden nun Pigmentpräparationen gefunden, enthaltend
a) wenigstens ein organisches Pigment
b) wenigstens einen gegebenenfalls ionisch modifizierten Phenol-Styrol-Polyglykolether und
c) wenigstens ein oberflächenaktives Mittel (Tensid) aus der Gruppe der gegebenenfalls oxalkylierten Acetylenglykole gemäß der Formel (I) 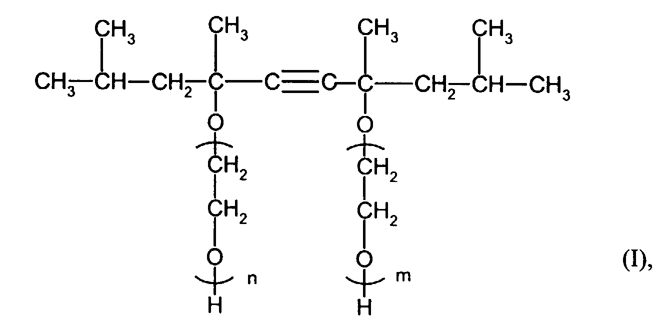 mit
   - n: = 0 bis 14,
   - m: = 0 bis 14 und
   - m + n: = 0 bis 14, vorzugsweise 3 bis 14
   und/oder aus der Gruppe der Verbindungen der Formel II, III und IV 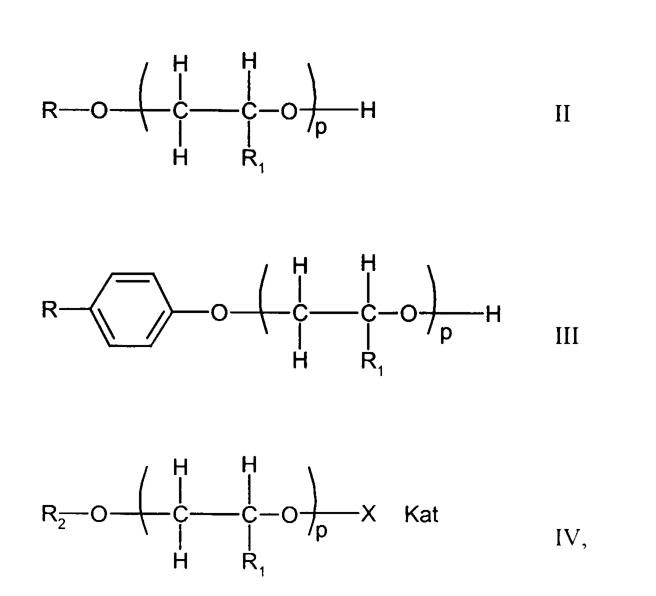 worin
   - R: für lineares oder verzweigtes C₆-C₁₈-Alkyl steht,
   - R₁: unabhängig voneinander H oder C₁-C₄-Alkyl, insbesondere Methyl bedeutet,
   - p: eine Zahl von 3 bis 60, vorzugsweise 3 bis 30, insbesondere 3 bis 12 bedeutet,
   - R₂: R oder gegebenenfalls C₁-C₁₈-Alkyl-, insbesondere C₆-C₁₈-Alkyl-substituiertes Phenyl,
   - X: die Gruppe ―SO₃⁻, ―SO₂⁻, ―PO₃⁻ oder ―CO-(R₃)-COO⁻ bedeutet,
   - R₃: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen,
   - Kat: ein Kation aus der Gruppe von H⁺, Li⁺, Na⁺, K⁺, NH₄⁺, oder -HO-CH₂-CH₂-NH₄⁺ ist, wobei im Fall von -PO₃⁻ zwei Kat vorliegen.

### Pigmente der Komponente a)

Prinzipiell ist eine große Vielzahl organischer Pigmente, allein oder in Kombination geeignet. Sie können sowohl in Form ihrer getrockneten Pulver als auch als wasserfeuchter Preßkuchen eingesetzt werden.

Geeignete organische Pigmente sind z.B. solche der Monoazo-, Disazo-, verlackte Azo-, β-Naphthol-, Naphthol AS-, Benzimidazolon-, Disazokondensations-, Azo-Metallkomplex-, Isoindolin -und Isoindolinon-Reihe, ferner polycyclische Pigmente wie z.B. aus der Phthalocyanin-, Chinacridon-, Perylen-, Perinon-, Thioindigo-, Anthrachinon-, Dioxazin-, Chinophthalon- und Diketopyrrolopyrrol-Reihe; außerdem verlackte Farbstoffe wie Ca-, Mg- und Al-Lacke von sulfonsäure- oder carbonsäuregruppenhaltigen Farbstoffen, sowie auch Ruße, die im Rahmen dieser Anmeldung als Pigmente verstanden werden und von denen eine große Zahl beispielsweise aus 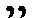 Colour Index, 2.Auflage 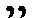 bekannt sind. Insbesondere sind zu nennen saure bis alkalische Ruße nach dem Gas- oder Furnacerußverfahren sowie chemisch oberflächenmodifizierte Ruße, beispielsweise sulfo- oder carboxylgruppenhaltige Ruße.

Besonders geeignet sind organische Pigmente aus der obigen Gruppe mit einer Lichtechtheit, bewertet mittels Blaumaßstab nach Belichtung der daraus hergestellten Ink-Jet-Vollflächendrucke auf Papieren mittels geeigneter Xenonbogenlampen (DIN 54004; z.B. Xenon Test 450^{R}), von größer Note 6, insbesondere größer Note 7.

Eine Auswahl der besonders geeigneten organischen Pigmente geht aus folgender Tabelle hervor:

| Farbton | Pigment Colour Index | Beispiel | Hersteller |
|---|---|---|---|
| Magenta | C.I. Pigment Red 122 Chinacridon | Quindo Magenta RV 6831® | Bayer AG |
| | C.I. Pigment Red 202 Chinacridon | Quindo Magenta RV 6843® | Bayer AG |
| Rot | C.I. Pigment Red 254 Diketo-pyrrolo-pyrrol | Cromophtal DPP Rot BO® | Ciba |
| | Pigment Red 272 Diketo-pyrrolo-pyrrol | Cromophthal DPP Flammrot FP® | Ciba |
| Blau | C.I. Pigment Blue 15:3 Cu-Phthalocyanin β | Phthalo Blue G® | Mac Cruder |
| | Pigment Blue 15:4 Cu-Phthalocyanin β | Heliogen Blau L 7101F® | BASF |
| Grün | C.I. Pigment Green 7 Cu-Phthalocyanin chloriert | Heliogen Grün K 8730® | BASF |
| | C.I. Pigment Green 36 Cu-Phthalocyanin halogeniert | Heliogen Grün K 9360® | BASF |
| Gelb | C.I. Pigment Yellow 109 Isoindolinon | Irgazin Gelb 2GLTE® | Ciba |
| | C.I. Pigment Yellow 128 Disazokondensation | Cromophtal Gelb 8GN® | Ciba |
| | C.I. Pigment Yellow 150 Azo-Nickel-Komplex | Gelbpigment E4GN® | Bayer |
| | C.I. Pigment Yellow 151 Benzimidazolon | Hostaperm Yellow H4G® | Clariant |
| Orange | C.I. Pigment Orange 36 Benzimidazolon | Novoperm Orange HL® | Clariant |
| | C.I. Pigment Orange 60 Benzimidazolon | | |
| | C.I. Pigment Orange 64 Benzimidazolon | Cromophtal Orange GP® | Ciba |
| | C.I. Pigment Orange 71 Diketo-pyrrolo-pyrrol | Cromophthal DPP Orange TRP® | Ciba |

Besonders bevorzugt enthält die gelbe Tinte eine Einschluß- oder Interkalationsverbindung von Pigmenten der allgemeinen Formel V oder VI, wobei die eingeschlossene Verbindung eine cyclische oder acyclisehe Verbindung, vorzugsweise Carbonsäure- oder Sulfonsäureamide, Harnstoff oder substituierte Harnstoffe sowie Heterocyclen, insbesondere 2,4,6-Triamino-1,3,5-triazin, Acetoguanamin und/oder Benzoguanamin ist.

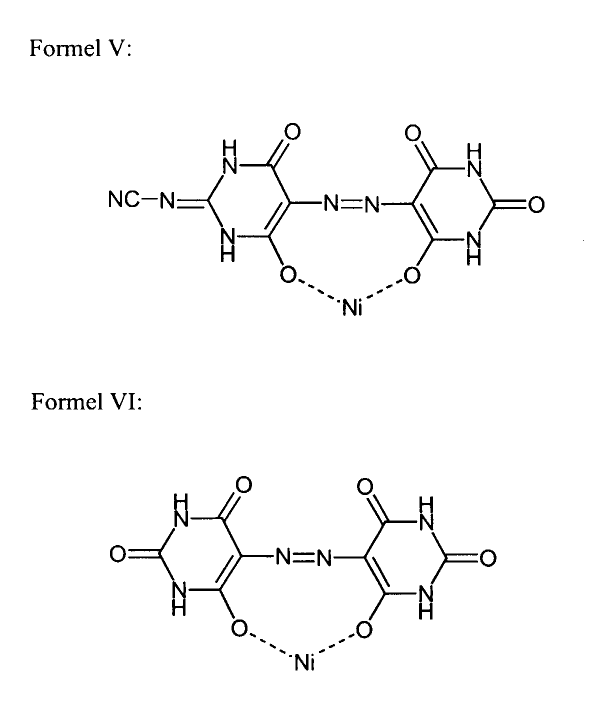

### Dispergiermittel der Komponente b):

Gegebenenfalls ionisch modifizierte Phenol-Styrol-Polyglykolether der Komponente b) sind beispielsweise aus DE -A -19644 077 bekannt. Bevorzugte Verbindungen der Komponente b) weisen einen HLB-Wert von 10 bis 20, insbesondere von 12 bis 18 auf.

Als Alkoxylierungsprodukte von Phenol-Styrol-Kondensaten sind solche der Formel (X) bevorzugt 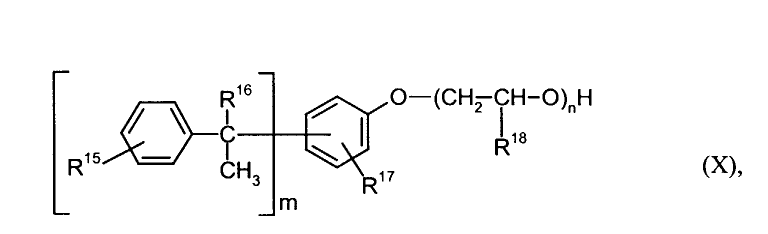 in der
- R¹⁵: Wasserstoff oder C₁ -C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1 bis 4 bedeutet,
- n: eine Zahl von 6 bis 120 bedeutet,
- R¹⁸: für jede durch n indizierte Einheit gleich oder verschieden ist und Für Wasserstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht.

Als ionisch modifizierte Phenol-Styrol-Polyglykolether (X) sind solche der Formel (XI) bevorzugt 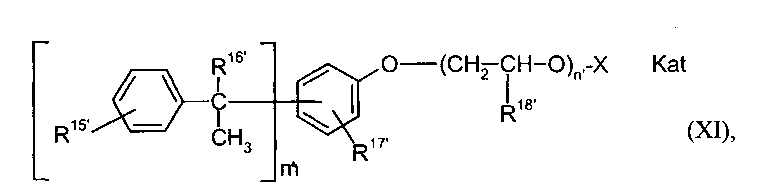 in der
R^{15'}, R^{16'}, R^{17'}, R^{18'}, m' und n' den Bedeutungsumfang von R¹⁵, R¹⁶, R¹⁷, R¹⁸, m bzw. n, jedoch unabhängig hiervon, annehmen,
   - X: die Gruppe -SO₃^{⊖}, -SO₂^{⊖}, -PO₃^{⊖⊖} oder -CO-(R¹⁹)-COO^{⊖} bedeutet,
   - Kat: ein Kation aus der Gruppe von H^{⊕}, Li^{⊕}, Na^{⊕}, K^{⊕}, NH₄^{⊕} oder -HO-CH₂CH₂-NH₄^{⊕} ist, wobei im Falle von X = -PO₃^{⊖⊖} zwei Kat vorliegen und
   - R¹⁹: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

Bevorzugt sind insbesondere auch Mischungen dieser Kondensate der Formeln (X) und (XI).

Besonders bevorzugte Verbindungen der Formel (X) bzw. (XI) werden erhalten, indem die Oxalkylierung blockweise sowohl mit Ethylenoxid als auch mit Propylenoxid erfolgt. Ganz besonders bevorzugte Verbindungen sind solche, die am Anfang einen Block mit 1 bis 20 Moleinheiten Propylenoxid und gegebenenfalls am Ende einen Block mit 1 bis 10 Moleinheiten Propylenoxid besitzen. Durch die Wahl der blockweisen Alkoxylierung kann die Affinität zu unterschiedlich hydrophoben Pigmentoberflächen nach Bedarf optimiert werden und die Stabilität der Drucktinten günstig beeinflußt werden.

Weiterhin bevorzugt können die erfindungsgemäßen Pigmentpräparationen zusätzlich als Komponente d) wenigstens ein Kondensationsprodukt auf Basis von
A) sulfonierten Aromaten
B) Aldehyden und / oder Ketonen und gegebenenfalls
C) einer oder mehrerer Verbindungen ,ausgewählt aus der Gruppe der nicht sulfonierten Aromaten,Harnstoff oder Harnstoffderivaten
enthalten.

Derartige Produkte sind z.B. offenbart in DE-A-19 801 759.

"Auf Basis von" bedeutet, daß das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatisehe, cycloaliphatisehe sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolharnstoff, Melamin oder Guanidin genannt werden.

Als bevorzugtes Kondensationsprodukt der Komponente d) wird eines auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin
eingesetzt.

Das bei der Kondensation bevorzugt erhaltene Kondensationsprodukt besitzt vorzugsweise einen mittleren Kondensationsgrad von 1 bis 150, besonders bevorzugt von 1 bis 20, insbesondere von 1 bis 5.

Die Kondensationsprodukte der Komponente d) können als wäßrige Lösung oder Suspension oder als Feststoff beispielsweise als Pulver oder Granulat, vorzugsweise als sprühgetrocknetes Pulver oder Granulat, eingesetzt werden.

Bevorzugte Kondensationsprodukte der Komponente d) weisen einen anorganischen Salzgehalt von unter 10 Gew.-%, vorzugsweise unter 5 Gew.-%, insbesondere unter 1 Gew.-% auf, bezogen auf die eingesetzte wäßrige Lösung bzw. Suspension der Komponente d) bzw. bezogen auf den eingesetzten Feststoff der Komponente d).

Ebenfalls bevorzugt ist es, restmonomerenarme bis restmonomerenfreie Kondensationsprodukte der Komponente d) einzusetzen.

Unter "monomerenarm" wird ein Restmonomerengehalt von weniger als 30 Gew.-%, vorzugsweise weniger als 20 Gew.-%, bezogen auf das Kondensationsprodukt, insbesondere < 10 Gew.-%, vorzugsweise <5 Gew.-%, verstanden. Unter Restmonomeren werden in diesem Zusammenhang, die zur Herstellung des Kondensationsproduktes eingesetzten Reaktanden verstanden.

Derartige salzarme und restmonomerenarme Kondensationsprodukte sind beispielsweise aus EP-A 816 406 bekannt.

Die Kondensationsprodukte der Komponente d) können beispielsweise dadurch hergestellt werden, daß man zunächst die sulfonierten Aromaten der Komponente A) gegebenenfalls im Gemisch mit nicht sulfonierten Aromaten der Komponente C) durch Umsetzung der zugrundeliegenden Aromaten mit einem Sulfonisierungsmittel vorzugsweise Schwefelsäure, insbesondere konzentrierte Schwefelsäure, Chlorsulfonsäure, Amidosulfonsäure oder Oleum, herstellt.

Auf 1 mol des der Komponente A) zugrundeliegenden Aromaten werden vorzugsweise 0,4 bis 3,2 mol, insbesondere 0,8 bis 1,6 mol Sulfonierungsmittel eingesetzt.

Anschließend erfolgt die Kondensation mit Aldehyden und/oder Ketonen der Komponenten B), vorzugsweise Formaldehyd, gegebenenfalls zusammen mit weiteren Verbindungen der Komponente C). Die Kondensation erfolgt vorzugsweise in wäßriger Lösung bei einem pH-Wert von 0 bis 9. Hierbei werden vorzugsweise pro Mol des sulfonierten Aromaten A) bzw. pro Mol einer Mischung aus sulfonierten Aromaten der Komponente A) und nicht sulfonierten Aromaten der Komponente C) 0,4 bis 1,5 mol, insbesondere 0,4 bis 1,0 mol der Komponente B) eingesetzt.

Daran schließt sich gegebenenfalls die Neutralisation des sulfonsauren Kondensationsproduktes der Komponente d) mit einer Base an.

Die Abtrennung der anorganischen Säure oder ihrer Salze sowie die Verringerung des Restmonomerengehaltes kann beispielsweise mittels Membrantrennverfahren durchgeführt werden. Als bevorzugte Membrantrennverfahren kommen dabei die Ultrafiltration, die Diffusionsdialyse oder Elektrodialyse in Frage.

Die bei den Membrantrennverfahren vorzugsweise bei der Ultrafiltration eingesetzten Membranen besitzen in einer bevorzugten Ausführungsform ein molecular-weight-cut-off (MWCO) von 1 000 bis 50 000 Dalton.

Die Abtrennung der anorganischen Säure mit Hilfe eines Membrantrennverfahrens erfolgt vorzugsweise auf dem Wege der Diafiltration mit säurestabilen Ultra- oder Nanofiltrationsmembranen in Querstromfiltrationsweise. Als geeignete Membranen sind dabei beispielsweise Polyhydantoinmembranen zu nennen, wie sie aus EP-A 65 20 44 bekannt sind.

Bevorzugte Membranen für diesen Zweck besitzen ein MWCO-level von 2 000 bis 20 000 Dalton. Gegebenenfalls wird bei diesem Verfahrensschritt gleichzeitig aufkonzentriert.

Die erfindungsgemäßen Pigmentpräparationen können neben den Komponenten a) bis d) auch Wasser, das vorzugsweise den Hauptbestandteil der Präparationen ausmacht, auch weitere geeignete Zusätze enthalten, insbesondere kommen für den Ink-Jet-Druck übliche Zusatzstoffe in Betracht.

So kann beispielsweise als weitere Komponente e) organisches Lösemittel zugegegen sein, das zur Einstellung der Tintenviskosität und zur Steuerung des Trocknungsverhaltens während des Druckvorgangs und auf dem Substrat geeignet ist. Auch die Tintenstabilität und andere Druckeigenschaften wie die Tropfenbildung selbst und die Entstehung von Satellittentropfen sowie Eigenschaften des Druckbildes können von der Wahl der Lösemittel beeinflußt werden. Im allgemeinen wird der Fachmann die Wahl der geeigneten Lösemittel experimentell auf die anderen genannten Rezepturbestandteile abstimmen.

Zusammen mit Wasser bilden die organischen Lösungsmittel das wässrig-organische Trägermedium der Tinten. Besonders geeignet sind in Wasser lösliche organische Lösungsmittel, vorzugsweise solche, die eine Löslichkeit von größer als 0,5 g/100 g Wasser aufweisen.

Als geeignete organische Lösungsmittel sind beispielsweise zu nennen: Aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, 1,4-Butandiol, 1,5-Pentandiol, 1,6-Hexandiol, Diethylenglykol, Triethylenglykol, Trimethylolpropan, Polyethylenglykol oder Polypropylenglykol mit einem mittleren Molgewicht von 100 bis 4000 g/mol, vorzugsweise 200 bis 1 500 g/mol, oder Glycerin, Monohydroxyether, vorzugsweise Monohydroxyalkylether, besonders bevorzugt Mono-C₁-C₄-alkylglykolether wie Ethylenglykolmonoethyl- oder -monomethylether, Diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

Es kommen auch Gemische der genannten Lösungsmitteln in Frage. Die Menge der Summe der eingesetzten Lösungsmittel in den Pigmentpräparationen beträgt im allgemeinen weniger als 60 Gew.-%, vorzugsweise weniger als 40 Gew.-%.

Bevorzugt beträgt die Menge an Wasser und organischem Lösungsmittel 1 bis 99,9, insbesondere 30 bis 99 Gew.-%, bezogen auf die Pigmentpräparation.

Weiterhin können die Pigmentpräparationen Mittel zur Einstellung der Viskosität enthalten wie beispielsweise Polyvinylalkohol, nichtionogene oder ionogene Polyhydroxyverbindungen, Polyvinylpyrrolidon, Methylcellulose u.a. dem Fachmann bekannte Mittel, soweit sie die Stabilität der wässrigen Pigmentpräparation und die Druckeigenschaften sowie das Verhalten auf dem Substrat nicht negativ beeinflussen.

Außerdem können die erfindungsgemäßen Pigmentpräparationen weitere ionogene oder nicht-ionogene Hilfsmittel enthalten. Sofern die bereits enthaltenen Verbindungen der Komponente b) , c) oder gegebenenfalls d) ionische Gruppen enthalten, sollten diese Hilfsmittel vorzugsweise nicht-ionogen oder von gleicher Ionogenität sein.

Grundsätzlich können die erfindungsgemäßen Pigmentpräparationen noch Konservierungsmittel, Lichtschutzmittel, weitere Tenside und gegebenenfalls pH-Regler enthalten.

Beispiele für pH-Regler sind NaOH, Ammoniak oder Aminomethylpropanol, N,N-Dimethylaminoethanol.

Beispiele für Lichtschutzmittel sind UV-Absorber.

Die erfindungsgemäßen, vorzugsweise wässrigen Pigmentpräparationen enthalten, bezogen auf die Präparation, vorzugsweise
- 0,1 bis 50 Gew. %,: vorzugsweise 0,1 bis 30 Gew.%, Pigment der Komponente a)
- 0,005 bis 20 Gew.%,: vorzugsweise 0,02 bis 10 Gew.%, eines gegebenenfalls ionisch modifizierten Phenol-Styrol-Polyglykolethers der Komponente b)
- 0,005 bis 10 Gew.%,: vorzugsweise 0,05 bis 1,5 Gew.%, eines oberflächenaktiven Mittels der Komponente c)
- 0 bis 20 Gew. %,: vorzugsweise 0 bis 10 Gew.% , eines Kondensationsproduktes der Komponente d) und
- 0 bis 99,8 Gew.%: eines wässrig-organischen Trägermediums, bestehend aus Wasser und gegebenenfalls organischem Lösungsmittel der Komponente e),
sowie gegebenenfalls weitere übliche Zusatzstoffe der oben genannten Art.

Mit der vorliegenden Erfindung werden folgende für den Ink-Jet-Druck mit wässrigen pigmentierten Drucktinten wesentlichen Eigenschaften verbessert.
- Hohe physikalische Stabilität der Drucktinten gegen Reagglomeration, Sedimentation und Separation während Langzeitlagerung vor Gebrauch und über den Zeitraum der Verwendung.
- Minimierung von Ablagerungen auf den Heizelementen oder andere Materialien des Druckkopfes.
- Sehr gute Wiederandruckbarkeit nach Druckerstillstand und kein Verstopfen der Düsen oder Verkrustungen/Antrocknungen an den Düsenaustrittsflächen sowie störungs- und fehlerfreies Langzeitdruckverhalten.
- Hohe Brillanz der Farben bei Druck auf beschichteten und unbeschichteten (Normal) Papieren sowie hohe Transparenz auf Folien.
- Gute Penetrations- und Trocknungseigenschaften auf den genannten Substraten verbunden mit guten Wisch- und Wasserechtheiten.
- Abdeckung eines größtmöglichen Farbraumes mittels einer Trichromie z.B. der Farben Magenta, Cyan und Gelb durch Verwendung von Pigmenten, die eine Lichtechtheit auf gleich hohem Niveau besitzen.

Die Erfindung betrifft weiterhin ein Satz von Drucktinten enthaltend wenigstens 4 Drucktinten der Farben Schwarz, Cyan, Magenta und Gelb, dadurch gekennzeichnet, daß wenigstens eine Drucktinte der erfindungsgemäßen wässrigen Pigmentpräparation entspricht.

Bevorzugt ist ein Satz von Drucktinten, worin die schwarze Drucktinte Ruß als Farbmittel enthält, insbesondere ein Ruß aus der Gruppe der sauren Gas- oder Furnaceruße.

Ebenfalls bevorzugt ist ein Satz von Drucktinten, dessen Cyan-Drucktinte ein Pigment aus der Gruppe der chlorierten Cu-Phthalocyaninpigmente, insbesondere ein Pigment mit dem Colour Index Pigment Blue 15:3 oder Pigment Blue 15:4 enthält.

Ebenfalls ist ein Satz von Drucktinten bevorzugt, dessen Magenta-Drucktinte ein Pigment aus der Gruppe der Chinacridon-Pigmente enthält, vorzugsweise Colour Index Pigment Red 122.

Ebenfalls ist ein Satz von Drucktinten bevorzugt, dessen Gelb-Drucktinte ein Pigment aus der Gruppe der Einschluß- oder Interkalationsverbindungen von Pigmenten der allgemeinen Formel V oder VI enthält, wobei als Einschluß- oder Interkalationsverbindungen, vorzugsweise die oben genannten Verbindungen in Frage kommen, die z.B. aus DE-A 3 935 858 und DE-A 19 712 486 (vorzugsweise in Beispiel 1) bekannt sind.

In einer besonderen Ausführungsform enthält der Satz von Drucktinten als schwarze Drucktinte eine Pigmentpräparation enthaltend ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm, insbesondere ZrN, TiN, TiC oder SiC, wie in DE-A 19 749 082 offenbart.

Erfindungsgemäß kann der Satz von Drucktinten zwecks Aufweitung des erreichbaren Farbraumes der gewünschten Abbildungen weitere Drucktinten enthalten. Hierbei kommen einerseits erfindungsgemäße Pigmentpräparationen als Drucktinten der genannten Art in Frage als auch weitere Drucktinten in anderen Reinfarbtönen als die genannten; insbesondere sind weitere Drucktinten des Satzes dadurch gekennzeichnet, daß - neben den Komponenten b), c) gegebenenfalls d) und e) - das Pigment der Komponente a) einer Orange-Drucktinte ein Pigment aus der Reihe der Benzimidazolon- oder Diketo-pyrrolo-pyrrol-Pigmente ist und das Pigment der Komponente a) einer Grün-Drucktinte ein Pigment aus der Reihe der chlorierten oder halogenierten Cu-Phthalocyanin Pigmente , vorzugsweise ein Pigment mit dem Colour Index Pigment Green 7 oder Pigment Green 36 ist.

Die Erfindung betrifft weiterhin die Herstellung der erfindungsgemäßen Drucktinten, die dadurch gekennzeichnet ist, daß man in einem ersten Schritt wenigstens ein Pigment der Komponente a) zusammen mit wenigstens einem Dispergiermittel der Komponente b) und gegebenenfalls oberflächenaktives Mittel der Komp. c) sowie gegebenenfalls Dispergiermittel der Komponente d) und gegebenenfalls weiteren Zusätzen in Wasser homogenisiert und vorzugsweise auf die gewünschte Partikelfeinheit von vorzugsweise 0,002 bis 2 µm, insbesondere 0,002 bis 0,5 µm naßzerkleinert. Anschließend in einem zweiten Schritt wird die so erhaltene wässrige Pigmentpräparation in das wässrig-organische Trägermedium bestehend aus Wasser und gegebenenfalls einem oder mehreren organischen Lösungsmitteln der Komponente e) zusammen mit gegebenenfalls noch erforderlichem oberflächenaktiven Mittel der Komponente c) und gegebenenfalls weiteren Zusatzstoffen einbringt und zur gebrauchsfertigen Drucktinte homogenisiert. Gegebenenfalls ist im Anschluß an die Homogenisierung noch eine Filtration der Tinte erforderlich, um Verunreinigungen oder Partikel mit einer Primärteilchengröße von über 2µm, vorzugsweise über 0,5 µm zu eliminieren.

Im allgemeinen wird das Pigment in Pulverform oder in Form des wasserfeuchten Preßkuchens zusammen mit einem Teil des Dispergiermittels und Wasser, vorzugsweise deionisiertem Wasser, zu einer homogenen Mahlsuspension beispielsweise mittels Rührwerksbütte, Dissolver und ähnlichen Aggregaten gegebenenfalls nach einer Vorzerkleinerung angeschlagen (d.h. eingebracht und homogenisiert).

Die Mahlsuspension kann außerdem Anteile niedrigsiedender Lösungsmittel (Siedepunkt <150°C) enthalten, die im Verlauf der anschließenden Feinmahlung durch Verdampfung ausgetragen werden können. Sie kann aber auch Anteile höhersiedender Lösungsmittel oder weiterer Zusätze, wie sie oben beschrieben sind z.B. Mahlhilfs-, Entschäumungs- oder Benetzungsmittel, enthalten.

Die Naßzerkleinerung umfaßt sowohl die Vorzerkleinerung als auch die Feinmahlung. Vorzugsweise liegt die Pigmentkonzentration der Suspension dabei oberhalb der gewünschten Konzentration der fertigen Pigmentpräparation bzw. Drucktinte. Die gewünschte Pigmentendkonzentration wird vorzugsweise erst im Anschluß an die Naßzerkleinerung eingestellt. Im Anschluß an die Vorzerkleinerung erfolgt eine Mahlung auf die gewünschte Partikelfeinverteilung von 0,002 bis 2 µm, vorzugsweise 0,002 bis 0,5 µm. Für diese Mahlung kommen Aggregate wie z.B. Kneter, Walzenstühle, Knetsehnecken, Kugelmühlen, Rotor-Stator-Mühlen, Dissolver, Korundscheibenmühlen, Schwingmühlen und insbesondere sehnelllaufende, kontinuierlich oder diskontinuierlich beschickte Rührwerkskugelmühlen mit Mahlkörpern mit einem Durchmesser von 0,05 bis 5 mm in Frage. Die Mahlkörper können dabei aus Glas, Keramik oder Metall, z.B. Stahl sein. Die Mahltemperatur liegt vorzugsweise im Bereich von 0 bis 250°C, in der Regel jedoch bei Raumtemperatur, insbesondere unterhalb des Trübungspunktes des eingesetzten oberflächenaktiven Mittels der Komponente c).

In einer ebenfalls bevorzugten Verfahrensweise kann die Mahlung teilweise oder vollständig in einem Hochdruckhomogenisator oder in einem sogenannten Strahldispergator (bekannt aus DE-A 19 536 845) erfolgen, wodurch der Gehalt an Mahlkörperabrieb in der Suspension bzw. die Abgabe von löslichen Stoffen aus den Mahlkörpern (z.B. Ionen aus Glaskörpern) auf ein Minimum reduziert bzw. vollständig vermieden werden kann.

Von besonderem Vorteil ist ein Verfahren zur Herstellung der Pigmentpräparationen, in dem im Mahlschritt zur Herstellung des Pigmentkonzentrates für die Stabilisierung ausreichend Dispergiermittel zur Verfügung gestellt wird. Im Anschluß daran oder nach Verdünnung mit Wasser wird in Lösung befindliches, nicht am Pigment adsorbiertes Dispergiermittel und/oder überschüssige oberflächenaktive Mittel vorzugsweise entfernt und anschließend die gewünschte Pigmentpräparation durch Zugabe der restlichen Anteile der Pigmentpräparation eingestellt.

Ein Verfahren zur Entfernung von in Lösung befindlichem Dispergiermittel ist beispielsweise die Zentrifugation der Suspension und anschließendes Abdekantieren des Überstandes.

Von besonderem Vorteil ist auch ein Verfahren zur Herstellung ebenfalls erfindungsgemäßen Pigmentpräparationen, dadurch gekennzeichnet, daß im Anschluß an die beschriebene Naßzerkleinerung und Einstellung eine Trocknung der wässrigen Suspension erfolgt, vorzugsweise mittels Sprühtrocknung, Gefriertrocknung oder Sprühgefriertrocknung, wobei eine Restfeuchte von 0 bis 10 Gew.-%, vorzugsweise 0,1 bis 4 Gew.-% bevorzugt wird.

In einem zweiten Schritt wird die erhaltene Pigmentpräparation in wässriger oder getrockneter Form wie oben beschrieben in das wässrig-organische Trägermedium gegebenenfalls zusammen mit dem oberflächenaktiven Mittel der Komponenten c) eingebracht und homogenisiert, wobei gleichzeitig die Einstellung auf die gewünschte Farbstärke der Drucktinte und die Zugabe gegebenenfalls weiterer noch erforderlicher Additive erfolgt. In diesem Schritt kann ggf. noch ein Teil des Dispergiermittels der Komponente b) oder gegebenenfalls d) zugesetzt werden, um beispielsweise eine Reagglomeration der feinen Pigmentpartikel in der Verdünnung zu vermeiden (Verdünnungsschock).

Ferner können andere polymere Additive wie z.B. Polyurethan- oder Acrylpolymere zugesetzt werden, um gegebenenfalls die Wasserechtheit der Ausdrucke weiter zu verbessern, beispielsweise für Anwendungen im Außenbereich. Diese Polymere können sowohl wasserlöslicher als auch wasseremulgierbarer Art sein, oder in einem der verwendeten Lösungsmittel der Komponente e) löslich sein.

In einer besonders bevorzugten Verfahrensweise erfolgt die Mischung und Homogenisierung zur Tinte unter Verwendung eines Strahldispergators oder Hochdruckhomogenisators bei Drücken von 5 bis 2 500 bar, insbesondere 20 bis 1 000 bar, um die Entstehung von Schaum zu unterbinden und mögliche Reagglomeration zu vermeiden.

Die Erfindung betrifft weiterhin die Verwendung der erfindungsgemäßen Pigmentpräparationen als Drucktinten für den Ink-Jet-Druck.

Mit der Einstellung der gewünschten Pigmentpräparationen erfolgt auch die Einstellung auf die gewünschte Viskosität, Farbstärke, Farbton, Dichte und Oberflächenspannung der Präparation.

Vor Gebrauch als Drucktinten werden die Tinten gegebenenfalls fein-filtriert beispielsweise mittels 0,5 bis 5 µm Membran- oder Glasfilter.

Im allgemeinen werden die physikalischen Tinteneigenschaften auf die Verwendung in üblichen Tintenstrahl-Druckern eingestellt, wobei die Oberflächenspannung von 20 bis 70 mN/m, insbesondere 30 bis 45 mN/m und die Viskosität kleiner als 20 mPa·s, vorzugsweise 0,5 bis 10 mPa·s sein sollte.

Die erfindungsgemäßen Präparationen liefern als Drucktinte im Ink-Jet-Druck verwendet Drucke mit ausgezeichneter Lichtechtheit und Brillanz und besitzen darüber hinaus folgende Vorteile: hervorragende Dispersions- und Lagerstabilität in einem weiten Temperaturbereich, keine sogenannte Kogation oder Clogging oder Verstopfung im Druckkopf, hohe Wasser- und Migrationsechtheit der Drucke auf unterschiedlichen Substraten, z.B. auf holzfreiem Papier, mittl. Papierqualität, geleimtem und beschichtetem Papier, polymeren Filmen, Transparentfolien für Overhead-Projektoren, kein Ausbluten im Mehrfarbendruck, auch bei Verwendung zusammen mit Farbstoff-Tinten oder anderen pigmentierten Tinten.

Der Ink-Jet-Druck ist an sich bekannt und erfolgt im allgemeinen so, daß die Drucktinte in ein Aufnahmegefäß eines Tintenstrahl-Druckkopfes gefüllt wird und in kleinen Tröpfchen auf das Substrat gesprüht wird. Der Tintenausstoß in Tröpfchenform erfolgt dabei vorzugsweise über einen piezoelektrischen Kristall, eine beheizte Kanüle (Bubble- oder Thermo-Jet-Verfahren) oder mechanische Druckerhöhung, wobei Druck auf das Tintensystem ausgeübt wird und so Tintentropfen herausgeschleudert werden. Dabei werden die Tröpfchen aus einer oder mehreren kleinen Düsen gezielt auf das Substrat wie z.B. Papier, holz, Textilien, Kunststoff oder Metall geschossen. Durch elektronische Aussteuerung werden die einzelnen Tröpfchen auf dem Substrat zu Schriftzeichen oder graphischen Mustern zusammengefaßt.

Möglich ist auch ein Verfahren, bei dem mittels elektrostatischer Ablenkung aus einem Tintenstrahl kleinste Volumina in Form von Tropfen auf ein Substrat gebracht werden.

Eine Methode zur Verwendung der erfindungsgemäßen Pigmentpräparationen als Drucktinten ist vorzugsweise dadurch gekennzeichnet, daß die Drucktinten unter Tropfenbildung kontinuierlich oder diskontinuierlich auf ein Substrat gesprüht werden. Insbesondere ist das Verfahren dadurch gekennzeichnet, daß zur Erzeugung der Tropfen das computergesteuerte thermische oder piezoelektrische Ink-Jet-Druck-Verfahren verwendet wird.

Bevorzugt ist die Verwendung der Drucktinten, dadurch gekennzeichnet, daß als Substrate beschichtete und unbeschichtete Papiere, Fotopapiere, polymere Filme, Folien sowie Textilien, Glas und Metalle verwendet werden.

Besonders bevorzugt ist die Verwendung der Drucktinten, die dadurch gekennzeichnet ist, daß Papiere für graphische Anwendungen mit Formaten von größer DIN A4 bedruckt werden.

### Beispiele:

### Beispiel 1

- 1,6 Teile: eines Dispergiermittelgemisches (Komponente b)) aus Alkoxylierungsprodukten gemäß Formel (X) und (XI) mit einer Zusammensetzung von
- 37 Gew.%: gemäß Formel (X) mit
R¹⁵ = CH₃, R ^{16,17,18} = H
m = 2,8
n = 29
und
- 63 Gew.%: gemäß Formel (XI) mit
R¹⁵ 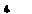 = CH₃ , R ¹⁶ 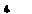 ^{,17} 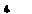 ^{,18} 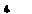 = H
m 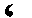 = 2,8
n 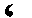 = 29
X = SO₃⁻
Kat = NH₄⁺
wurden bei 80°C aufgeschmolzen und zu
- 61,4 Teilen: deionisiertem Wasser hinzugegeben und vollständig gelöst. Zu der Lösung wurden
- 1,7 Teile: des Dispergiermittels TAMOL® NH 7519 (BASF AG, Komponente d)) unter Rühren eingetragen und gelöst. Anschließend wurden
- 35,0 Teilen: Spezialschwarz® 4 (Degussa AG) eingetragen, mittels Dissolver vorzerkleinert und homogenisiert. Hierbei wurde der pH-Wert der Suspension mittels Triethanolamin auf pH 7,1 eingestellt. Im Anschluß wurde die Suspension in eine 1l Rührwerkskugelmühle (Fabrikat Sussmeyer, Brüssel) eingebracht und mit Zirkoniumoxid-Perlen (Fraktion 0,4-0,6 mm) unter Kühlung über eine Dauer von 3 Stunden gemahlen. Die wäßrige Pigmentpräparation wurde mit
- 0,2 Teilen: des Konservierungsmittels Proxel® GXL 20%ig (Fa. Zeneca) sowie
- 0,1 Teilen: des Konservierungsmittels Preventol® D2 (Bayer AG) und deionisiertem Wasser auf eine Pigmentkonzentration von 25 % eingestellt.

Diese Präparation besitzt eine sehr gute Fließfähigkeit und einwandfreie Suspensionsstabilität bei Lagerung über 3 Monate sowohl bei Raumtemperatur als auch bei 50°C. Wäßrige Verdünnungen dieser Präparation bis zu einer Pigmentkonzentration von 2 % sind ebenso stabil. Die Zusammensetzung kann Tabelle 1 entnommen werden.

### Beispiel 2

- 1,4 Teile: eines Dispergiermittels (Komponente b)) gemäß Formel (XI) hergestellt wie in Beispiel 8 von DE A 19 644 077 offenbart , wurden bei 80°C aufgeschmolzen und zu
- 18,7 Teilen: deionisiertem Wasser hinzugegeben und vollständig gelöst. Zu der Lösung wurden
- 6,9 Teile: des Dispergiermittels TAMOL® NH 7519 (BASF AG, Komponente d)) unter Rühren eingetragen. Anschließend wurden
- 72,7 Teile: des wasserfeuchten Preßkuchens des Pigmentes Colour Index Pigment Yellow 150 hergestellt nach Beispiel 1 aus DE A 19644 077 mit einem Trockengehalt von 37,1 % zugesetzt und die Mischung mittels Dissolver vorzerkleinert und homogenisiert. Hierbei wurde der pH-Wert der Suspension mittels verdünnter Schwefelsäure auf pH 5,5 eingestellt. Im Anschluß wurde die Suspension in eine 1l Rührwerkskugelmühle (Fabrikat Sussmeyer, Brüssel) eingebracht und mit Zirkoniumoxid-Perlen (Fraktion 0,4-0,6 mm) unter Kühlung über eine Dauer von 3 Stunden gemahlen. Die wäßrige Pigmentpräparation wurde mit
- 0,2 Teilen: des Konservierungsmittels Proxel® GXL 20 %ig (Fa. Zeneca) sowie
- 0,1 Teilen: des Konservierungsmittels Preventol® D2 (Bayer AG) und deionisiertem Wasser auf eine Pigmentkonzentration von 25 % eingestellt.

Diese Präparation besitzt eine sehr gute Fließfähigkeit und einwandfreie Suspensionsstabilität bei Lagerung über 3 Monate sowohl bei Raumtemperatur als auch bei 50°C. Wäßrige Verdünnungen dieser Präparation bis zu einer Pigmentkonzentration von 2 % sind ebenso stabil. Die Zusammensetzung kann Tabelle 1 entnommen werden.

### Beispiel 3

- 5,0 Teile: eines Dispergiermittels (Komponente b)) gemäß Formel (XI) hergestellt wie in Beispiel 8 aus DE A 19644 077 offenbart, wurden bei 80°C aufgeschmolzen und zu
- 11,6 Teilen: deionisiertem Wasser hinzugegeben und vollständig gelöst. Zu der Lösung wurden
- 3,7 Teile: des Dispergiermittels TAMOL® NN 9401 SA (BASF AG, Komponente d)) unter Rühren eingetragen. Anschließend wurden
- 79,4 Teile: des wasserfeuchten Preßkuchens des Pigmentes vom Colour Index Pigment Rot 122 (QUINDO®Magenta RV 6831, Bayer Corp) mit einem Trockengehalt von 31,5 % zugesetzt und die Mischung mittels Dissolver vorzerkleinert und homogenisiert. Hierbei wurde der pH-Wert der Suspension mittels Triethanolamin auf pH 7,2 eingestellt. Im Anschluß wurde die Suspension in eine 1l Rührwerkskugelmühle (Fabrikat Sussmeyer, Brüssel) eingebracht und mit Zirkoniumoxid-Perlen (Fraktion 0,4-0,6 mm) unter Kühlung über eine Dauer von 3 Stunden gemahlen. Die wäßrige Pigmentpräparation wurde mit
- 0,2 Teilen: des Konservierungsmittels Proxel® GXL 20 %ig (Fa. Zeneca) sowie
- 0,1 Teilen: des Konservierungsmittels Preventol® D2 (Bayer AG) und deionisiertem Wasser auf eine Pigmentkonzentration von 25 % eingestellt.

Diese Präparation besitzt eine sehr gute Fließfähigkeit und einwandfreie Suspensionsstabilität bei Lagerung über 3 Monate sowohl bei Raumtemperatur als auch bei 50°C. Wäßrige Verdünnungen dieser Präparation bis zu einer Pigmentkonzentration von 2 % sind ebenso stabil. Die Zusammensetzung kann Tabelle 1 entnommen werden.

### Beispiel 4

- 92,1 Teile: eines handelsüblichen wasserfeuchtem Preßkuchens des Pigmentes vom Colour Index Pigment Blau 15:3 mit einem Trockengehalt von 38,0 % wurden am Dissolver vorgelegt,
- 3,7 Teile: des Dispergiermittels TAMOL® NH 7519 (BASF AG, Komponente d)) eingetragen,
- 0,4 Teile: deionisiertes Wasser hinzugegeben und die Mischung homogenisiert; anschließend wurden
- 3,5 Teile: des Dispergiermittelgemisches wie in Beispiel 1 beschrieben bei 80°C aufgeschmolzen, eingetragen und die Suspension homogenisiert.
Hierbei wurde der pH-Wert der Suspension mittels Triethanolamin auf pH 7,2 eingestellt. Im Anschluß wurde die Suspension in eine 1l Rührwerkskugelmühle (Fabrikat Sussmeyer, Brüssel) eingebracht und mit Zirkoniumoxid-Perlen (Fraktion 0,4-0,6 mm) unter Kühlung über eine Dauer von 3 Stunden gemahlen. Die wäßrige Pigmentpräparation wurde mit
- 0,2 Teilen: des Konservierungsmittels Proxel® GXL 20 %ig (Zeneca) sowie
- 0,1 Teile: des Konservierungsmittels Preventol® D2 (Bayer AG) und deionisiertem Wasser auf eine Pigmentkonzentration von 25 % eingestellt.

Diese Präparation besitzt eine sehr gute Fließfähigkeit und einwandfreie Suspensionsstabilität bei Lagerung über 3 Monate sowohl bei Raumtemperatur als auch bei 50°C. Wäßrige Verdünnungen dieser Präparation bis zu einer Pigmentkonzentration von 2 % sind ebenso stabil. Die Zusammensetzung kann Tabelle 1 entnommen werden.

**Tabelle 1**

| Zusammensetzung der Pigmentpräparationen (Angaben in Gew.%) | | | | |
|---|---|---|---|---|
| Komponente | Beispiel 1 | Beispiel 2 | Beispiel 3 | Beispiel 4 |
| | | | | |
| Spezialschwarz 6 | 25,0 | | | |
| Pigment Gelb 150 | | 25,0 | | |
| Pigment Rot 122 | | | 25,0 | |
| Pigment Blau 15:3 | | | | 25,0 |
| Tamol® N9401 SA (Komp. d) | | | 3,7 | |
| Tamol® NH7519 (Komp. d) | 1,2 | 6,4 | | 2,7 |
| Dispergiermittelgemisch Komponente b) gem. Formel (X) und (XI) | 1,1 | | | 2,5 |
| Dispergiermittel Komponente b) gem. Formel (XI) | | 1,3 | 5,0 | |
| VE-Wasser | 72,4 | 67,0 | 66,0 | 69,5 |
| Proxel® GXL (20%ig) | 0,2 | 0,2 | 0,2 | 0,2 |
| Preventol® D2 | 0,1 | 0,1 | 0,1 | 0,1 |

### Beispiele 5- 12: Pigmentpräparationen in Form von Drucktinten

Auf Basis der Pigmentpräparationen gemäß den Beispielen 1-4 wurden erfindungsgemäße Pigmentpräparationen in Form von Drucktinten für den Ink-Jet-Druck unter Einsatz von deionisiertem Wasser, organischen Lösungsmitteln der Komponente e) sowie oberflächenaktiven Mittel der Komponente c) hergestellt 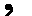 indem zunächst Wasser zusammen mit Lösungsmittel und oberflächenaktivem Mittel vorgelegt wurde und anschließend Teile der Pigmentpräparationen gemäß Beispielen 1 bis 4 eingetragen wurde. Die Zusammensetzung der als Drucktinte zu verwendenden Pigmentpräparation wurde jeweils so gewählt, daß die Viskosität der Drucktinte in einem Bereich von 1,5 bis 5 mPas lag. Als oberflächenaktive Mittel der Komponente c) wurden verwendet:
1) Surfynol® 465 (Fa. Air Products) Ethoxylat des 2,4,7,9-Tetramethyl-5-decyn-4,7-diol gemäß Formel (I)
2) ERKANTOL® NR (Bayer AG) Mischung aus 2 Verbindungen gemäß Formel (II) 85%ig in Wasser, zu beschreiben mit:
   - 1. Verbindung:: R= Isodecyl ,R₁= H , p = 6
   - 2. Verbindung:: R = 2-Ethylhexan ; R₁= CH₃ , p = 6

Die Herstellung erfolgte ausgehend von den Pigmentpräparationen der Beispiele 1 bis 4 durch Mischen und Rühren mit der erforderlichen Menge an VE-Wasser sowie sonstigen Zusätzen in einem Glasbehälter. Im Anschluß erfolgte eine Ultraschallbehandlung über 1 Minute und eine gegebenenfalls notwendige pH-Einstellung mittels Triethanolamin. Die Zusammensetzung der als Drucktinten verwendeten Pigment-präparationen geht aus Tabelle 2 hervor.

Diese Pigmentpräparationen wurden vor dem Drucken durch ein 1,2 µm Filter feinfiltriert, um gegebenenfalls Mahlkörperabrieb und Grobanteil aus der Suspension zu entfernen.

Die Eigenschaften im Ink Jet-Druck unter Verwendung der Drucktinten gemäß Beispielen 5-12 sind in Tabelle 3 zusammengestellt. Die Prüfung erfolgte auf einem Drucker vom Typ DeskJet® HP 1600 der Firma Hewlett Packard unter Verwendung von folgenden Papiersorten:
A = Normalpapier (unbeschichtet, AGFA®701, Fa. Agfa-Gevaert)
B = beschichtetes Papier 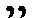 HP-Premium" (Hewlett Packard HP®51634Z)
C = Glanzpapier 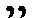 HP-Glossy" (Hewlett Packard HP®C3837A)

### Prüfkriterien:

- L*, C*, h:: Koloristische Werte gemessen mittels CIELAB System 1976 (CM 3700, Fa. Minolta)
- Viskosität:: Mittelwert über den Schergeschwindigkeitsbereich von D = 0,5-1000 1/s bei 23°C (Haake RS150, Fa. Haake)
- Teilchendurchmesser:: bestimmt mittels Scheibenzentrifuge (DCP 1000, Fa. Brookhaven)
- Andrucktest:: Wiederandruckbarkeit bestimmt mittels Druck nach offener Kartuschenlagerung bei Raumtemperatur über 2 Wochen ohne Reinigung, Kartusche HP®51645A, Hewlett Packard
- Vollflächentest:: visuelle Beurteilung einer vollbedrucketen DIN A4 Seite mittels Kartusche HP®51645A, Hewlett Packard
Druckmodus: hochauflösend
Papiersorte: entsprechend Papierart
- Schrifttest:: visuelle Beurteilung der Kantenschärfe im 2 Farbendruck unter Verwendung einer handelsüblichen Farbstofftinte für den Hintergrunddruck:
Gelb auf Magenta Hintergrund,
Schwarz, Cyan, Magenta auf Gelb Hintergrund
Prüftintenkartusche: Kartusche HP®51645A,Hewlett Packard
Hintergrund: Kartusche HP®51640Y, M, Hewlett Packard
Druckmodus : Normal
Papiersorte : A
- Wassertest:: visuelle Beurteilung der Wasserfestigkeit mittels Ablaufen von Tropfen (0,250 ml) über die um 45° geneigte Papierfläche bedruckt mit Streifenmuster nach 3,5 min und (1 Stunde) Trocknungszeit bei Raumtemperatur
Kartusche HP®51645A, Hewlett Packard
Druckmodus: Normal bei Papierart A, Hochauflösend bei Papier B
- Markertest :: visuelle Beurteilung der Markerechtheit mittels Überschriftung eines Streifenmusters mit lösungsmittelhaltigen Textmarkern in drei Farben nach 1 Stunde Trocknungszeit des Druckes bei Raumtemperatur.
Kartusche HP®51645A, Hewlett Packard
Druckmodus: Normal bei Papierart A, Hochauflösend bei Papier B
- Satellitentropfentest :: Visuelle Bewertung anhand eines Textausdruckes auf weißem Hintergrund
Kartusche HP®51645A, Hewlett Packard
Druckmodus : Normal
Papierart A

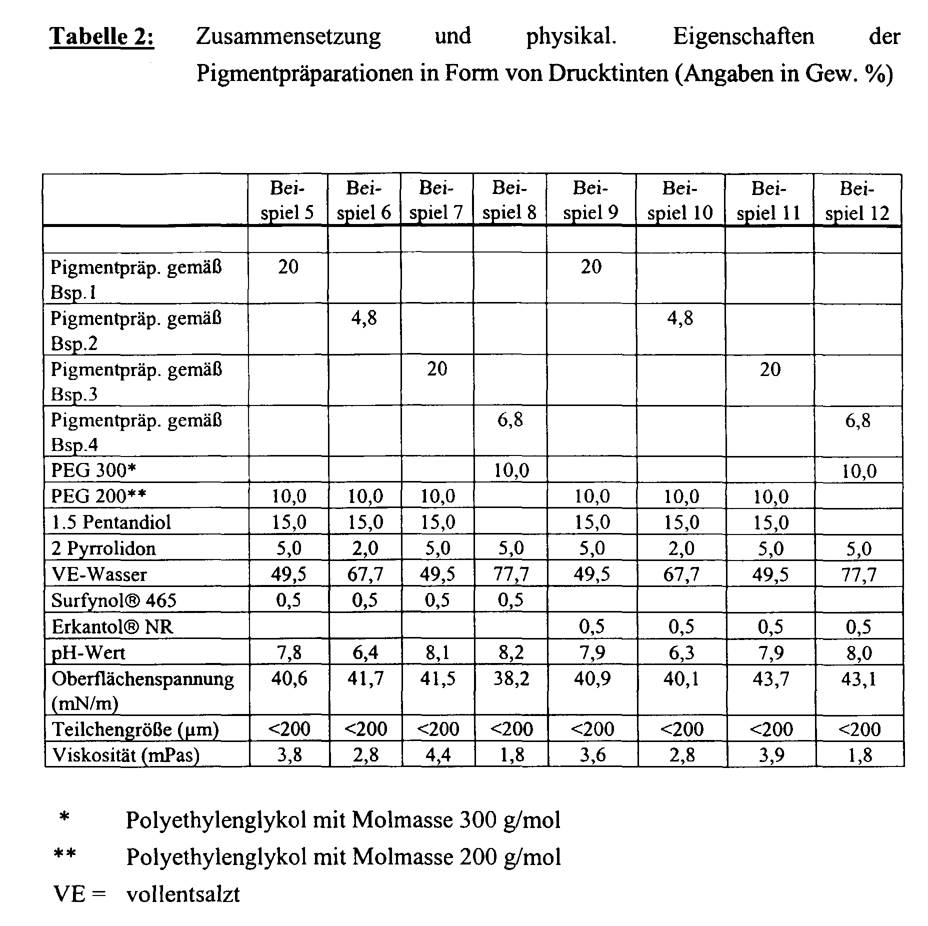

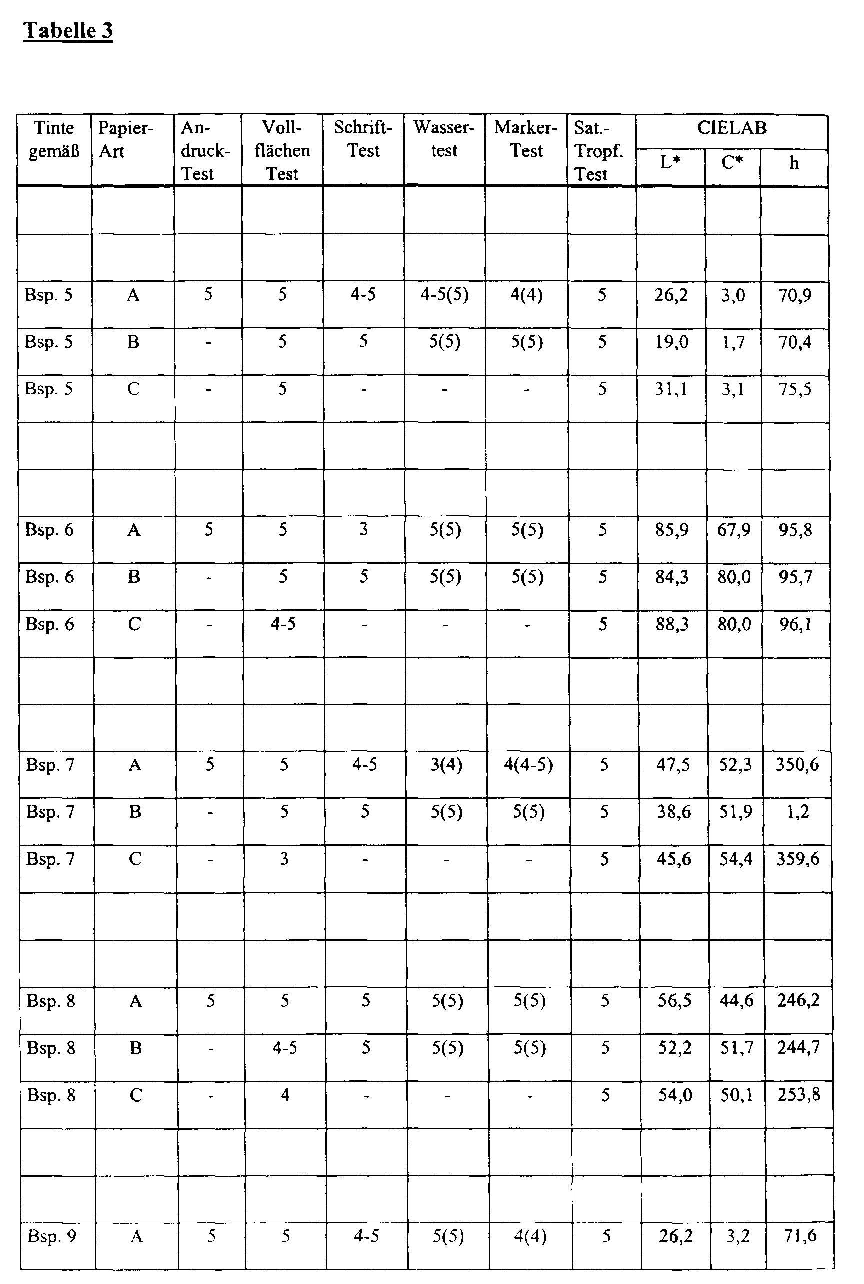

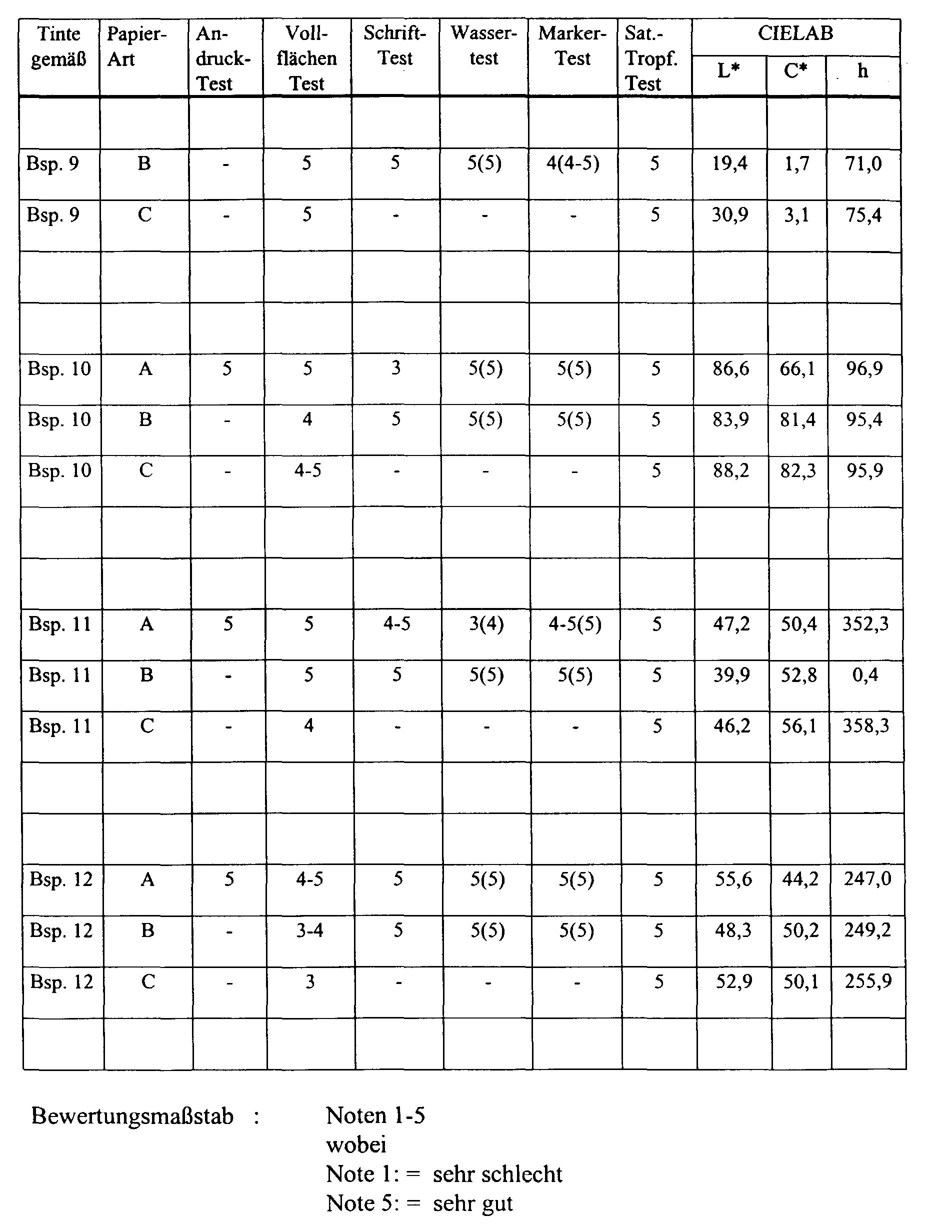

Die Pigmentpräparationen in Form von Drucktinten ließen sich außerdem auf einem Großformatdrucker 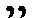 DesignJet® HP-2500" (Fa. Hewlett Packard) auf beschichtetem großformatigem Papier einwandfrei und zuverlässig verdrucken und ergaben Druckbilder in Farbbildmotiven mit ausgezeichneter Brillanz und hoher Lichtechtheit.

### Beispiele 13 - 18 :

Wie in Beispiel 1 beschrieben, wurden weitere Pigmentpräparationen auf Basis der Pigmente vom Color Index Pigment Grün 7, Pigment Grün 36 und Pigment Orange 64 hergestellt und analog den Beispielen 5 bis 8 zu Drucktinten verarbeitet.

Die Zusammensetzung der Pigmentpräparationen (Beispiel 13 bis 15) geht aus Tabelle 4 hervor. Diese Präparationen besitzen gute Fließfähigkeit und Lagerstabilität sowohl bei Raumtemperatur als auch bei 50°C. Die daraus hergestellten Drucktinten (Beispiel 16 bis 18) gehen aus Tabelle 5 hervor. Sie ließen sich auf dem HP® 1600 Drucker sehr gut und zuverlässig verdrucken und ergaben in den Testkriterien wie Beispiele 5-12 vergleichbar gute Testergebnisse. Lediglich die Wiederandruckbarkeit der Drucktinte gemäß Beispiel 18 zeigte geringe Düsenverstopfung bei Wiederandruck nach Lagerung, welche jedoch nach kurzer Druckzeit behoben war.

**Tabelle 4**

| Zusammensetzung der Pigmentpräparationen (Angaben in Gew.-%) | | | |
|---|---|---|---|
| Komponente | Beispiel 13 | Beispiel 14 | Beispiel 15 |
| C.I. Pigment Grün 7 | 25,0 | | |
| C.I. Pigment Grün 36 | | 25,0 | |
| C.I. Pigment Orange 64 | | | 25,0 |
| | | | |
| Tamol® N9401 SA (Komp. d) | 3,7 | 3,9 | |
| | | | |
| Dispergiermittelgemisch wie in Beispiel 1 | 5,4 | 5,0 | |
| Dispergiermittel wie in Beispiel 2 | | | 5,4 |
| VE-Wasser | 65,6 | 65,8 | 69,3 |
| Proxel® GXL (20%ig) | 0,2 | 0,2 | 0,2 |
| Preventol® D2 | 0,1 | 0,1 | 0,1 |

**Tabelle 5**

| Zusammensetzung und physikal. Eigenschaften der Pigmentpräparationen in Form von Drucktinten (Angaben in Gew. %) | | | |
|---|---|---|---|
| | Beispiel 16 | Beispiel 17 | Beispiel 18 |
| | | | |
| Pigmentpräp. gemäß Bsp.13 | 2 | | |
| Pigmentpräp. gemäß Bsp.14 | | 2 | |
| Pigmentpräp. gemäß Bsp.15 | | | 3 |
| | | | |
| PEG 200 | 10,0 | 10,0 | 10,0 |
| 1.5 Pentandiol | 15,0 | 15,0 | 15,0 |
| 2 Pyrrolidon | 5,0 | 2,0 | 5,0 |
| VE-Wasser | 67,5 | 67,5 | 66,5 |
| Surfynol® 104 ¹⁾ | 0,2 | | |
| Erkantol® NR | 0,3 | 0,5 | 0,5 |
| | | | |
| Oberflächenspannung (mN/m) | 41,2 | 42,4 | 41,5 |
| Teilchengröße (µm) | <200 | <200 | <200 |
| Viskosität (mPas) | 2,1 | 2,3 | 3,6 |

| | | | |
|---|---|---|---|
| ¹⁾ : 2,4,7,9-Tetramethyl-5-decyn-4,7-diol | | | |

## Patentansprüche

1. Pigmentpräparationen, enthaltend
a) wenigstens ein organisches Pigment
b) wenigstens einen gegebenenfalls ionisch modifizierten Phenol-Styrol-Polyglykolether und
c) wenigstens ein oberflächenaktives Mittel aus der Gruppe der oxalkylierten Acetylenglykole gemäß der Formel (I) 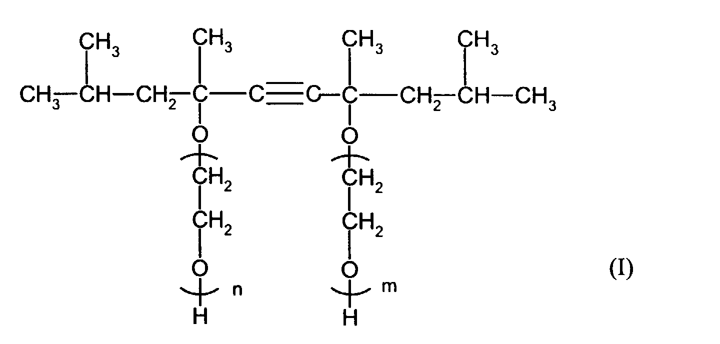 mit
n = 0 bis 14,
m =0 bis 14 und
m + n = 0 bis 14, vorzugsweise 3 bis 14
und/oder aus der Gruppe der Verbindungen der Formel II, III und IV 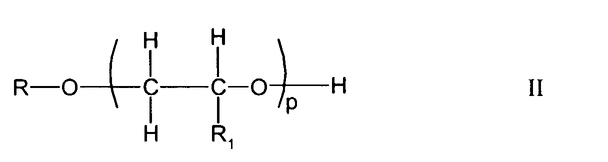 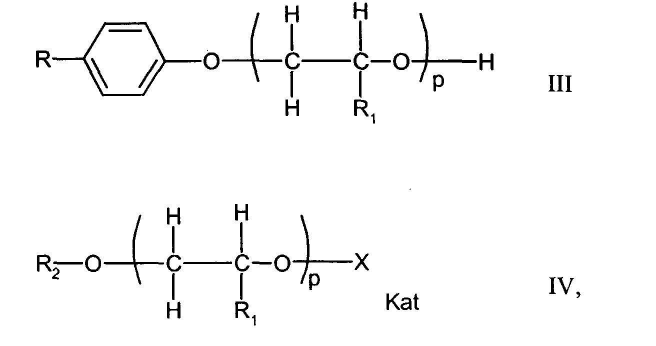 worin
R für linear oder verzweigtes C₆-C₁₈-Alkyl steht,
R₁ unabhängig voneinander H oder C₁-C₄-Alkyl, insbesondere Methyl, bedeutet,
p eine Zahl von 3 bis 60, vorzugsweise 3 bis 30, insbesondere 3 bis 12 bedeutet,
R₂ R oder gegebenenfalls C₁-C₁₈-Alkyl-, insbesondere C₆-C₁₈-Alkyl-substituiertes Phenyl,
X die Gruppe ―SO₃⁻, ―SO₂⁻, ―PO₃⁻ oder ―CO-(R₃)-COO⁻ bedeutet,
R₃ für einen zweiwertigen aliphatischen oder aromatischen Rest steht, vorzugsweise für C₁-C₄-Alkylen, insbesondere Ethylen, C₂-C₄-einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen,
Kat ein Kation aus der Gruppe von H⁺, Li⁺, Na⁺, K⁺, NH₄⁺, oder -HO-CH₂-CH₂-NH₄⁺ ist, wobei im Fall von -PO₃⁻ zwei Kat vorliegen.

2. Pigmentpräparationen gemäß Anspruch 1, dadurch gekennzeichnet, daß sie als Pigment der Komponente a) eine Einschluß- oder Interkalationsverbindung von Pigmenten der allgemeinen Formel V oder VI enthalten, 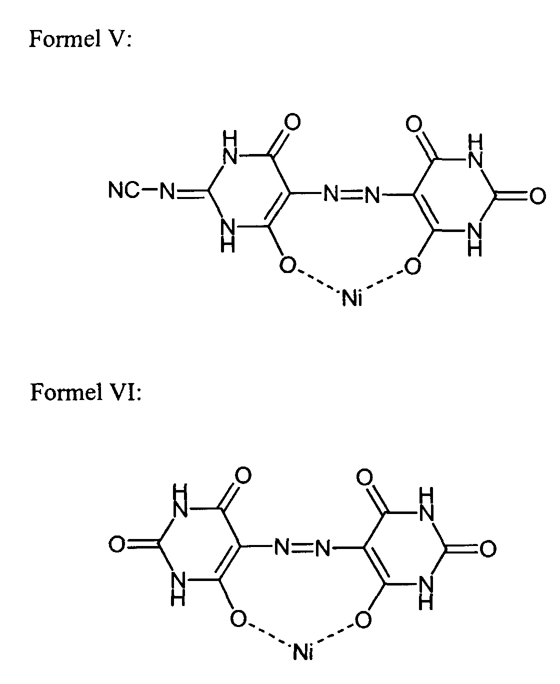 wobei die eingeschlossene Verbindung eine cyclische oder acyclische Verbindung, vorzugsweise Carbonsäure- oder Sulfonsäureamide, Harnstoff oder substituierte Harnstoffe sowie Heterocyclen, insbesondere 2,4,6-Triamino-1,3,5-triazin, Acetoguanamin und/oder Benzoguanamin ist.

3. Pigmentpräparationen gemäß Anspruch 1, dadurch gekennzeichnet, daß der gegebenenfalls ionisch modifizierte Phenol-Styrol-Polyglykolether der Komponente b) einen HLB-Wert von 10 bis 20, insbesondere von 12 bis 18 aufweist.

4. Pigmentpräparationen gemäß Anspruch 1, dadurch gekennzeichnet, daß als Komponente b) Alkoxylierungsprodukte von Phenol-Styrol-Kondensaten der Formel (X) eingesetzt werden 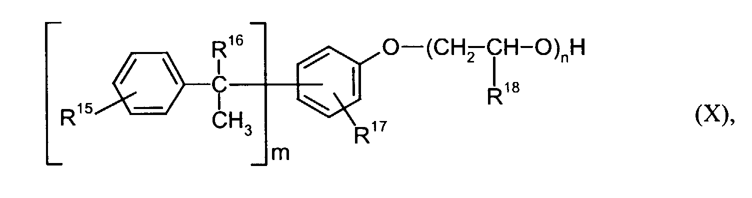 in der
R¹⁵ Wasserstoff oder C₁-C₄-Alkyl bedeutet,
R¹⁶ für Wasserstoff oder CH₃ steht,
R¹⁷ Wasserstoff, C₁-C₄-Alkyl, C₁-C₄-Alkoxy, C₁-C₄-Alkoxycarbonyl oder Phenyl bedeutet,
m eine Zahl von 1 bis 4 bedeutet,
n eine Zahl von 6 bis 120 bedeutet,
R¹⁸ für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht,
und als ionisch modifizierte Phenol-Styrol-Polyglykolether solche der Formel (XI) eingesetzt werden 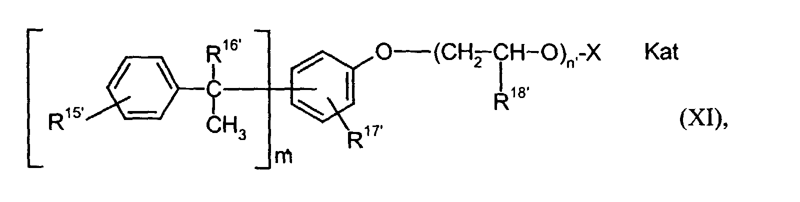 in der
R^{15'}, R^{16'}, R^{17'}, R^{18'}, m' und n' den Bedeutungsumfang von R¹⁵, R¹⁶, R¹⁷, R¹⁸, m bzw. n, jedoch unabhängig hiervon, annehmen,
X die Gruppe -SO₃^{⊖}, -SO₂^{⊖}, -PO₃^{⊖⊖} oder -CO-(R¹⁹)-COO^{⊖} bedeutet,
Kat ein Kation aus der Gruppe von H^{⊕}, Li^{⊕}, Na^{⊕}, K^{⊕}, NH₄^{⊕} oder -HO-CH₂CH₂-NH₄^{⊕} ist, wobei im Falle von X = -PO₃^{⊖⊖} zwei Kat vorliegen und
R¹⁹ für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

5. Pigmentpräparationen gemäß Anspruch 1, dadurch gekennzeichnet, daß zusätzlich als Komponente d) wenigstens ein Kondensationsprodukt auf Basis von
A) sulfonierten Aromaten
B) Aldehyden und/oder Ketonen und gegebenenfalls
C) einer oder mehrerer Verbindungen, ausgewählt aus der Gruppe der nicht sulfonierten Aromaten, Harnstoff oder Harnstoffderivaten
enthalten ist.

6. Pigmentpräparationen gemäß Anspruch 5, dadurch gekennzeichnet, daß als Kondensationsprodukt der Komponente d) eines auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin
eingesetzt wird.

7. Pigmentpräparationen gemäß Anspruch 1, dadurch gekennzeichnet, daß als weitere Komponente e) organisches Lösungsmittel eingesetzt wird, vorzugsweise aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, 1,4-Butandiol, 1,5-Pentandiol, 1,6-Hexandiol, Diethylenglykol, Triethylenglykol, Trimethylolpropan, Polyethylenglykol oder Polypropylenglykol mit einem mittleren Molgewicht von 100 bis 4000 g/mol, vorzugsweise 200 bis 1 500 g/mol, oder Glycerin, Monohydroxyether, vorzugsweise Monohydroxyalkylether, besonders bevorzugt Mono-C₁-C₄-alkylglykolether wie Ethylenglykolmonoethyl- oder -monomethylether, Diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinylpyrrolidon, 1,3-Dimethyl-imidazolidon, Dimethylacetamid sowie Dimethylformamid.

8. Pigmentpräparationen gemäß Anspruch 1, enthaltend bezogen auf die Präparation,
0,1 bis 50 Gew. %, vorzugsweise 0,5 bis 10 Gew.%, Pigment der Komponente a)
0,005 bis 20 Gew.%, vorzugsweise 0,02 bis 1,0 Gew.%, eines gegebenenfalls ionisch modifizierten Phenol-Styrol-Polyglykolethers der Komponente b)
0,005 bis 10 Gew.%, vorzugsweise 0,05 bis 1,5 Gew.%, eines oberflächen-aktiven Mittels der Komponente c)
0 bis 20 Gew. %, vorzugsweise 0 bis 0,6 Gew.%, eines Kondensationsproduktes der Komponente d) und
0 bis 99,8 Gew.% eines wässrig-organischen Trägermediums bestehend aus Wasser und gegebenenfalls einem organischen Lösungsmittel der Komponente e), insbesondere
mehr als 30 Gew.% Wasser,
sowie gegebenenfalls weitere übliche Zusatzstoffe der oben genannten Art.

9. Verfahren zur Herstellung Pigmentpräparationen gemäß Anspruch 1, dadurch gekennzeichnet, daß man wenigstens ein Pigment der Komponente a) zusammen mit wenigstens einem Dispergiermittel der Komponente b) und gegebenenfalls oberflächenaktiven Mittel der Komponente c) in Wasser homogenisiert, naßzerkleinert und gegebenenfalls trocknet, und anschließend die so erhaltene Präparation in ein wässrig-organisches Trägermedium enthaltend Wasser und gegebenenfalls organisches Lösungsmittel der Komponente e) gegebenenfalls zusammen mit oberflächenaktiven Mittel der Komponente c) und gegebenenfalls anderen Zusätzen einbringt und homogenisiert.

10. Verwendung der Pigmentpräparationen gemäß Anspruch 1 als Drucktinten für den Ink-Jet-Druck.

11. Satz von Drucktinten enthaltend wenigstens 4 Drucktinten der Farben Schwan, Cyan, Magenta und Gelb, dadurch gekennzeichnet, daß wenigstens eine Drucktinte der Pigmentpräparation gemäß Anspruch 1 entspricht.

12. Ein Satz von Drucktinten gemäß Anspruch 11, dadurch gekennzeichnet, daß
- das Pigment der schwarzen Drucktinte ein Ruß, vorzugsweise aus der Gruppe der sauren Gas- oder Furnaceruße ist, und/oder
- das Pigment der Cyan Drucktinte ein Pigment aus der Gruppe der chlorierten Cu-Phthalocyaninpigmente, vorzugsweise ein Pigment mit dem Colour Index Pigment Blue 15:3 oder Pigment Blue 15:4 ist, und/oder
- das Pigment der Magenta Drucktinte ein Pigment aus der Gruppe der Chinacridon-Pigmente, vorzugsweise ein Pigment mit dem Colour Index Pigment Red 122 ist, und/oder
- das Pigment der gelben Tinte ein Pigment aus der Gruppe der Einschluß- oder Interkalationsverbindungen von Pigmenten der allgemeinen Formel (V) oder (VI) , vorzugsweise der Formel (VI), ist.

13. Ein Satz von Drucktinten gemäß Anspruch 11 enthaltend wenigstens 4 Drucktinten der Farben Schwarz, Cyan, Magenta und Gelb, dadurch gekennzeichnet, daß die schwarze Drucktinte ein Pigment aus der Gruppe der Carbide, Nitride, Boride und Silicide der Elemente Ti, Zr, Hf, Si, Ge und Sn mit einer mittleren Primärpartikelgröße von 0,1 bis 50 nm, insbesondere ZrN, TiN, TiC oder SiC, enthält.

14. Ein Satz von Drucktinten gemäß Anspruch 11 enthaltend zusätzlich eine orange und/oder eine grüne Drucktinte, dadurch gekennzeichnet, daß das Pigment der orangen Drucktinte ein Pigment aus der Reihe der Benzimidazolon oder Diketo-pyrrolo-pyrrol-Pigmente ist und das Pigment der grünen Drucktinte ein Pigment aus der Reihe der chlorierten oder halogenierten Cu-Phthalocyanin Pigmente, vorzugsweise ein Pigment mit dem Colour Index Pigment Green 7 oder Pigment Green 36 ist.

15. Verwendung der Pigmentpräparationen gemäß Anspruch 1 als Drucktinte für den Ink-Jet-Druck, dadurch gekennzeichnet, daß die Drucktinten unter Tropfenbildung kontinuierlich oder diskontinuierlich auf ein Substrat gesprüht werden, insbesondere dadurch gekennzeichnet, daß als Verfahren zur Erzeugung der Tropfen der computergesteuerte thermische oder piezoelektrische Ink-Jet-Druck verwendet wird.

16. Verwendung gemäß Anspruch 15, dadurch gekennzeichnet, daß mit der Ink-Jet-Methode beschichtete und unbeschichtete Papiere, Fotopapiere, polymere Filme, Folien sowie Textilien, Glas oder Metalle bedruckt werden.

17. Verwendung gemäß Anspruch 15, dadurch gekennzeichnet, daß Spezialpapiere für graphische Anwendungen mit Formaten von größer DIN A4 bedruckt werden.
